(19) Europäisches Patentamt
European Patent Office
Office européen des brevets

(11) EP 3 075 778 B1

(12) EUROPEAN PATENT SPECIFICATION

(45) Date of publication and mention of the grant of the patent:
**24.10.2018 Bulletin 2018/43**

(21) Application number: **14865120.1**

(22) Date of filing: **25.11.2014**

(51) Int Cl.:
***B29C 47/00*** *(2006.01)*
***B29C 47/08*** *(2006.01)*
***B29C 47/38*** *(2006.01)*
***C08L 23/00*** *(2006.01)*
***B29C 33/72*** *(2006.01)*
***C08K 3/00*** *(2018.01)*
*B29K 23/00 (2006.01)*

(86) International application number:
**PCT/JP2014/081120**

(87) International publication number:
**WO 2015/080103 (04.06.2015 Gazette 2015/22)**

(54) **PURGING AGENT AND PURGING METHOD USING SAME**

SPÜLMITTEL UND SPÜLVERFAHREN UNTER DESSEN VERWENDUNG

AGENT DE PURGE ET PROCÉDÉ DE PURGE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2013 JP 2013243495**
**12.11.2014 JP 2014229819**

(43) Date of publication of application:
**05.10.2016 Bulletin 2016/40**

(73) Proprietor: **The Nippon Synthetic Chemical Industry Co., Ltd.**
**Osaka-shi, Osaka 530-0018 (JP)**

(72) Inventor: **USUI Shintaro**
**Osaka-shi**
**Osaka 530-0018 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**EP-A1- 2 591 903**
**JP-A- H1 016 024**
**JP-A- H1 067 040**
**JP-A- H05 269 754**
**JP-A- H05 279 518**
**JP-A- 2012 031 404**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 075 778 B1

## Description

### Technical Field

The present invention relates to a purging agent for use in devices for melting and molding thermoplastic resins. More particularly, the invention relates to a purging agent suitable for ethylene/vinyl ester copolymer saponification resins and to a purging method in which the purging agent is used.

### Background Art

Highly polar thermoplastic resins such as ethylene/vinyl ester copolymer saponification resins (hereinafter often referred to as EVOH resins), polyvinyl alcohol-based resins (hereinafter often referred to as PVA resins), and polyamide-based resins (hereinafter often referred to as PA resins) have excellent gas barrier properties, and have hitherto been generally used as packaging films, containers, or the like for foods, etc. molded or formed by melt molding methods.

However, there has been a problem in that in cases when such a thermoplastic resin is melted and molded over a prolonged period, some of the thermoplastic resin stagnates over a prolonged period in the resin channels of the melt molding machine, e.g., extruder, to cause gelation, thermal deterioration, decomposition, etc., resulting in products which bear streaks or in product failures due to gel inclusion into products.

In such cases when products that bear streaks or contain gel particles have come to be produced, it is effective to stop the production operation and use a purging agent to clean and remove the thermoplastic resin which is present in the resin channels of the melt molding machine and partly has stuck thereto.

Conventionally known as such a purging agent is a purging agent including a hydrocarbon-based resin composition which contains a relatively large amount of at least one metal salt selected from the group consisting of alkali metal salts and salts of alkaline earth metals (see, for example, patent document 1).

This purging agent functions by a mechanism in which the metal salt moves to the resin to be purged and decomposes the resin to be purged, thereby producing an excellent cleaning effect.

### Prior-Art Document

### Patent Document

Patent Document 1: JP-A-2012-31404

### Summary of the Invention

### Problem that the Invention is to Solve

However, the purging agent of patent document 1 was found to be insufficient in cleaning effect in portions where the channels are narrow and located in high-temperature severe environments, such as the die portion of a melt molding machine.

Consequently, an object of the present invention is to provide a purging agent which has an even better cleaning effect.

### Means for Solving the Problem

The present inventor diligently made investigations in view of those circumstances. As a result, the inventor has directed attention to that a purging agent which includes a hydrocarbon-based resin and at least one metal salt selected from the group consisting of alkali metal salts and salts of alkaline earth metals, the content of the metal salt being higher than 1% by weight but not higher than 20% by weight in terms of metal amount based on the hydrocarbon-based resin, and which has a shear viscosity ratio as determined with the following equation of 12-16 is effective especially in the purging of resins to be purged which include an ethylene/vinyl ester copolymer saponification resin.

$$\text{Shear viscosity ratio} = \eta(X)/\eta(Y)$$

[In the equation, $\eta(X)$ is shear viscosity (Pa·s) at a temperature of 230°C and a shear rate of 12.2 $sec^{-1}$, and $\eta(Y)$ is shear viscosity (Pa·s) at a temperature of 230°C and a shear rate of 1,824 $sec^{-1}$.]

That is, the invention is characterized in that in cases when a hydrocarbon-based resin composition which contains a relatively large amount of at least one metal salt selected from the group consisting of alkali metal salts and salts of alkaline earth metals is to be used as a purging agent, this purging agent is made to have a large value of shear viscosity ratio regarding a specific high shear rate and a specific low shear rate.

With respect to purging in the portions of resin channels where stagnation occurs when a thermoplastic resin (resin to be purged) is melted and molded using a melt molding machine such as an extruder, it is generally thought that the higher the shear viscosity at a low shear rate, the better the purging performance whereby the stagnant thermoplastic resin is cleaned and removed.

However, it has been unexpectedly discovered that by using a purging agent which has a large value of shear viscosity ratio regarding specific shear rates, an excellent cleaning effect is obtained even in portions where the channels are narrow and located in high-temperature severe environments, such as the die portion of a melt molding machine. The present invention has been thus completed.

It is preferable that the purging agent of the invention should have a melt flow rate, as measured at 230°C under a load of 2,160 g, of 0.2-20 g/10 min.

The present invention further relates to a method for purging a resin to be purged which is present in a melt molding machine, the method including using this purging agent.

The present invention furthermore relates to a method for purging a resin to be purged which is present in a melt molding machine, the method including filling the melt molding machine with the purging agent, stopping the screw and allowing the melt molding machine to stand for 5 minutes to 5 hours while keeping the inside of the melt molding machine in the state of having been filled with the purging agent, and discharging the purging agent.

Effect of the Invention

According to the invention, in cases when a hydrocarbon-based resin composition which contains a relatively large amount of at least one metal salt selected from among alkali metal salts and salts of alkaline earth metals is used as a purging agent, this purging agent satisfies a shear viscosity ratio within a specific range. Due to this, the purging agent is excellent in terms of the effect of cleaning and removing a resin to be purged which is present in a melt molding machine, in particular, a resin to be purged which includes an ethylene/vinyl ester copolymer saponification resin. This purging agent exhibits the excellent cleaning effect even in channels which are narrow and located in high-temperature severe environments, such as the die portion of a melt molding machine.

Modes for Carrying Out the Invention

Configurations of the invention are explained below in detail. However, the following explanations merely show desirable embodiments, and the invention should not be construed as being limited to the following embodiments.

The purging agent of the invention is used in order to clean and remove the thermoplastic resin (resin to be purged) which stagnates in the resin channel within a melt molding machine, such as an extruder, when the thermoplastic resin is melted and molded using the melt molding machine.

The term "barrel temperature of an extruder" in the invention means the surface temperature of the barrel of the extruder. In the case where the barrel of the extruder has a plurality of sections and the individual sections have been set at different temperatures, the highest of the temperatures is referred to as the barrel temperature.

<Purging Agent>

The purging agent of the invention is a composition which includes a hydrocarbon-based resin as the base and which contains a relatively large amount of at least one metal salt selected from the group consisting of alkali metal salts and salts of alkaline earth metals.

The content of the hydrocarbon-based resin based on the purging agent composition of the invention is usually 80% by weight or higher, preferably 85% by weight or higher.

[Hydrocarbon-based Resin]

The hydrocarbon-based resin as the base of the purging agent of the invention is a polymer having a molecular weight of usually 10,000 or higher which has been produced from one or more monomers including usually 80% by mole or more at least one hydrocarbon-based monomer as the main monomer(s) and in which the main chain is configured of carbon bonds only.

This hydrocarbon-based resin has low polarity and hence has the property of being less apt to adhere to the metals constituting the melt molding machine.

From the standpoint of the dischargeability of the purging agent, it is preferable that the content of copolymerizable monomers other than the hydrocarbon-based monomer(s) should be less than 20% by mole.

Examples of the hydrocarbon-based resin include polyolefin-based resins produced mainly from aliphatic hydrocarbon-based monomers and polystyrene-based resins produced mainly from aromatic hydrocarbon-based monomers.

The polyolefin-based resins produced mainly from aliphatic hydrocarbon-based monomers are explained below. Examples of the aliphatic hydrocarbon-based monomers include ethylene, propylene, and butene.

The term "polyolefin-based resins" means homopolymers of such aliphatic hydrocarbon-based monomers and random or block copolymers of two or more olefin monomers.

Examples thereof include: polyethylene-based resins such as ultralow-density polyethylene, (linear) low-density polyethylene, high-density polyethylene, and ethylene/$\alpha$-olefin copolymers, e.g., ethylene/propylene copolymers, ethylene/octene copolymers, and ethylene/hexene copolymers; polypropylene-based resins such as polypropylene and propylene/$\alpha$-olefin copolymers, e.g., propylene/ethylene copolymers and propylene/butene copolymers; and polybutene and polymethylpentene.

The polystyrene-based resins produced mainly from aromatic hydrocarbon-based monomers are explained below. Examples of the aromatic hydrocarbon-based monomers include styrene and methylstyrene. Examples of the polystyrene-based resins include homopolymers of such aromatic hydrocarbon-based monomers and random or block copolymers of two or more such monomers.

From the standpoints of the dischargeability and profitability of the purging agent, polyethylene-based resins or polypropylene-based resins are preferred as the hydrocarbon-based resin, and polyethylene-based resins are especially preferred. More preferred is low-density polyethylene. Even more preferred is linear low-density polyethylene.

The present invention is characterized in that the purging agent having a large value of shear viscosity ratio regarding specific shear rates ($sec^{-1}$) is used. It is, however, preferable that the hydrocarbon-based resin serving as the base of the purging agent should be regulated to control the shear viscosity ratio thereof regarding the specific shear rates ($sec^{-1}$).

The shear viscosity $\eta(x)$ of the hydrocarbon-based resin as measured at a temperature of 230°C and a shear rate of 12.2 $sec^{-1}$ is usually 1,500-4,500 Pa·s, preferably 2,000-4,000 Pa·s, especially preferably 2,500-3,500 Pa·s.

The shear viscosity $\eta(y)$ of the hydrocarbon-based resin as measured at a temperature of 230°C and a shear rate of 1,824 $sec^{-1}$ is usually 80-350 Pa·s, preferably 120-300 Pa·s, especially preferably 160-250 Pa·s.

The shear viscosity ratio of the hydrocarbon-based resin, which is determined using the following equation, is usually 13.0-17.0, preferably 13.5-16.5, especially preferably 14.0-15.5.

$$\text{Shear viscosity ratio} = \eta(x)/\ \eta(y)$$

[In the equation, $\eta(x)$ is shear viscosity (Pa·s) at a temperature of 230°C and a shear rate of 12.2 $sec^{-1}$, and $\eta(y)$ is shear viscosity (Pa·s) at a temperature of 230°C and a shear rate of 1,824 $sec^{-1}$.]

The shear viscosity ratio of the hydrocarbon-based resin can be determined by measuring the shear viscosity thereof at 230°C and at each of the shear rates using a capillary rheometer (flow characteristic measuring device) and calculating the ratio from the results of the measurement.

The density of the hydrocarbon-based resin, in terms of the value determined in accordance with JIS K7112 (1999), is usually 0.85-0.98 g/$cm^3$, desirably 0.90-0.95 g/$cm^3$, preferably 0.91-0.94 g/$cm^3$, more preferably 0.92-0.93 g/$cm^3$. In cases when the value thereof is within that range, the purging effect tends to be more remarkably obtained.

The melt flow rate (MFR) of the hydrocarbon-based resin, as measured under the conditions of 190°C and a load of 2,160 g, is usually 0.1-50 g/10 min, preferably 0.2-10 g/10 min, more preferably 0.5-5 g/10 min. In cases when the value thereof is within that range, the purging effect tends to be more remarkably obtained.

The number-average molecular weight of the hydrocarbon-based resin, in terms of the value determined with a GPC (gel permeation chromatograph) using polystyrene as a standard, is usually $1\times10^4$ to $5\times10^4$, preferably $2\times10^4$ to $4\times10^4$, more preferably $3\times10^4$ to $3.8\times10^4$, especially preferably $3\times10^4$ to $3.5\times10^4$. In cases when the value thereof is within that range, the purging effect tends to be more remarkably obtained.

The molecular-weight dispersity ratio ((weight-average molecular weight)/(number-average molecular weight)) of the hydrocarbon-based resin is usually 3-6, preferably 3.2-5, especially preferably 3.5-4.5. In cases when the value thereof is within that range, the purging effect tends to be more remarkably obtained.

[Metal Salt]

The purging agent of the invention is a composition which includes a hydrocarbon-based resin as the base and

which contains a relatively large amount of at least one metal salt selected from the group consisting of alkali metal salts and salts of alkaline earth metals.

Consequently, the content of the metal salt in the purging agent of the invention, in terms of metal amount based on the hydrocarbon-based resin, is higher than 1% by weight but not higher than 20% by weight, especially preferably 1.2-10% by weight, more preferably 1.5-3% by weight. In case where the amount thereof is too large, production efficiency and profitability tend to decrease. In case where the amount thereof is too small, the cleaning effect tends to be insufficient.

The alkali metals and alkaline earth metals in the at least one metal salt selected from the group consisting of alkali metal salts and salts of alkaline earth metals are ones having the function of decomposing the resin to be purged. Examples of the alkali metals include lithium, sodium, potassium, rubidium, and cesium, and examples of the alkaline earth metals include beryllium, magnesium, calcium, strontium, and barium. Of these, alkaline earth metals are preferred from the standpoints of availability, profitability, and purging performance. Especially preferred are magnesium and calcium.

Examples of the alkali metal salts and the salts of alkaline earth metals include organic salts and inorganic salts. It is preferable that these salts should be low-molecular-weight compounds, from the standpoint of dispersibility in the resin composition.

The term "organic salts" means carboxylic acid salts. Examples thereof include acetates, oxalates, laurates, myristates, palmitates, stearates, arachidonates, heptadecylates, behenates, oleates, elaidates, erucates, linolates, linolenates, ricinolates, hydroxystearates, montanates, isostearates, and epoxystearates.

Of these, long-chain aliphatic carboxylic acid salts having a relatively large number of carbon atoms are preferred from the standpoint that these salts have surface-activating ability. Preferred are carboxylic acid salts having 10-25 carbon atoms. More preferred are carboxylic acid salts having 12-22 carbon atoms. Especially preferred are carboxylic acid salts having 14-20 carbon atoms. In case where the number of carbon atoms thereof is too large, such carboxylic acid salts tend to have poor suitability for general uses. In case where the number of carbon atoms thereof is too small, there is a tendency that surface activity when melting is insufficient and this results in insufficient purging performance.

Specifically, the organic salts preferably are salts of carboxylic acids having 14-20 carbon atoms with Group 2 metals, and most preferably are the magnesium salts of carboxylic acids having 14-20 carbon atoms.

Such organic salts have a melting point of usually 100-220°C, preferably 110-180°C, especially preferably 120-160°C. Such an organic salt is preferred from the standpoint that the organic salt, upon melting in the channel, exhibits surface-activating ability.

The term "inorganic salts" means salts which have an anion derived from an inorganic compound. Examples thereof include borates, phosphates, carbonates, and sulfates. Of these, basic inorganic salts are preferred from the standpoint that such salts are highly effective in decomposing EVOH resins to show a high cleaning effect. Especially preferred are carbonates.

In particular, magnesium carbonate is preferred since this salt is stable in the state of basic magnesium carbonate and because the salt in this state is on the market.

Inorganic salts do not melt in the resin channel, and are hence thought to have the effect of physically scraping off the resin to be purged which has stuck to the inside of the resin channel.

It is preferable that the particle diameter of the metal salts to be used for producing the purging agent of the invention should be small from the standpoints of moldability and of inhibiting stagnation within the device. Preferably, the average particle diameter of each metal salt, as determined by a particle size distribution analysis by the laser diffraction scattering method, is usually 20 $\mu$m or less.

It is preferable that the metal salts to be used for producing the purging agent of the invention should be a combination of any of the organic salts and any of the inorganic salts. In particular, the inorganic salt/organic salt weight ratio is usually 0.05-10, preferably 0.1-8, especially preferably 0.2-5, more preferably 1-1.5.

The metal species of the inorganic salt and that of the organic salt may be the same or different. From the standpoint of the dischargeability of the purging agent, it is preferable that the salts should have the same metal species.

From the standpoints of raw-material profitability, production efficiency, and cleaning effect, it is preferable that a carbonate be used as the inorganic salt and a long-chain aliphatic carboxylic acid salt be used as the organic salt.

It is most preferable that magnesium carbonate be used as the inorganic salt and the magnesium salt of a carboxylic acid having 14-20 carbon atoms be used as the organic salt.

In the case where an inorganic salt and an organic salt are used in combination as the metal salts, the effect of cleaning based on the decomposition, by the metal salts, of the resin to be purged is enhanced. Furthermore, since the inorganic salt has a melting point of usually 500°C or higher, which is far higher than the melt molding temperatures of general thermoplastic resins, the inorganic salt does not melt in the resin channel and is thought to serve to frictionally scrape off the resin to be purged which remains on the walls of the resin channel. Meanwhile, since the organic salt, such as a higher fatty acid salt, is a kind of surfactant, this salt is presumed to have the effect of lifting up the resin to be purged, which is adherent to the inside of the resin channel, and stripping off the resin from the metal surfaces.

[Other Ingredients]

The purging agent of the invention may contain a heat stabilizer such as a hindered phenol or a hindered amine, a silicone-based or fluorochemical fatty acid ester, an amide-based lubricant, a blowing agent, a filler (metal oxide, hydroxide, etc.), and the like according to need in an amount of usually less than 3% by weight, preferably less than 1% by weight, based on the whole purging agent.

[Shear Viscosity Ratio of the Purging Agent]

The most characteristic feature of the purging agent of the invention resides in that the shear viscosity ratio determined using the following equation is within a specific range.

$$\text{Shear viscosity ratio} = \eta(X) / \eta(Y)$$

[In the equation, $\eta(X)$ is shear viscosity (Pa·s) at a temperature of 230°C and a shear rate of 12.2 $sec^{-1}$, and $\eta(Y)$ is shear viscosity (Pa·s) at a temperature of 230°C and a shear rate of 1,824 $sec^{-1}$.]

The shear viscosity ratio thereof is usually 12.0-16.0, preferably 12.5-15.0, especially preferably 13.0-14.5. In case where the shear viscosity ratio thereof is too low, there is a tendency that the effect of cleaning and removing the resin to be purged is not sufficiently obtained. Meanwhile, in case where the shear viscosity ratio thereof is too high, this purging agent itself is prone to be difficult to discharge. The shear viscosity ratio of the purging agent can be determined by measuring the shear viscosity thereof at 230°C and at each of the shear rates using a capillary rheometer (flow characteristic measuring device) and calculating the ratio from the results of the measurement.

The shear viscosity $\eta(X)$ of the purging agent as measured at a temperature of 230°C and a shear rate of 12.2 $sec^{-1}$ is usually 1,000-4,000 Pa·s, preferably 1,500-3,500 Pa ·s, especially preferably 2,000-3,000 Pa·s.

The shear viscosity $\eta(Y)$ of the purging agent as measured at a temperature of 230°C and a shear rate of 1,824 $sec^{-1}$ is usually 60-340 Pa·s, preferably 100-280 Pa·s, especially preferably 130-240 Pa·s.

The melt flow rate (MFR) of the purging agent of the invention, as measured at 230°C under a load of 2,160 g, is preferably 0.2-20 g/10 min, more preferably 0.5-15 g/10 min, especially preferably 1-10 g/10 min. In case where the value thereof is too large, the purging effect tends not to be sufficiently exhibited.

<Method for producing the Purging Agent>

The purging agent of the invention is produced by compounding the metal salt(s) with a hydrocarbon-based resin serving as the base.

For this compounding, known techniques can be used. Preferred of these is to use an extruder, from the standpoints of processability and profitability. The kinds of extruders are not particularly limited, and use can be made of common extruders including a single-screw extruder, twin-screw extruder, and multi-screw extruder.

When the ingredients are compounded by means of an extruder, the barrel temperature of the extruder is usually 150-300°C, preferably 160-280°C, especially preferably 170-250°C.

It is preferable that the metal salt(s) in the purging agent should be in the state of having been evenly dispersed in the hydrocarbon-based resin as the base.

It is preferable that the purging agent of the invention obtained by the compounding described above should be then pelletized. For the pelletizing, known methods can be employed. Examples of the shape of the pellets usually include a spherical shape, a cylindrical shape, a cubic shape, and the shape of a rectangular parallelepiped. Cylindrical pellets are preferred, and the diameter thereof is usually 1-5 mm and the length thereof is usually 1-5 mm.

<Resin to be purged>

The thermoplastic resin to which the purging agent of the invention is to be applied (i.e., the resin to be purged) includes an ethylene/vinyl ester copolymer saponification resin (EVOH resin). EVOH resins are highly polar thermoplastic resins having the property of being prone to adhere to the metals of melt molding machines and being difficult to remove. Polar-group-containing thermoplastic resins are frequently used as the interlayers of packaging materials for foods, etc. because of the gas barrier performance thereof. Of these, EVOH resins have excellent gas barrier properties and satisfactory safety and are hence in extensive use. The purging agent of the invention can be effectively used for the purging of resins to be purged which include such an EVOH resin.

[EVOH Resin]

The EVOH resin to be used in the invention usually is a resin obtained by copolymerizing ethylene and a vinyl ester-based monomer and then saponifying the copolymer, and is a water-insoluble thermoplastic resin. Although any of known polymerization methods such as, for example, solution polymerization, suspension polymerization, and emulsion polymerization can be used, solution polymerization is generally used in which methanol is used as the solvent. The saponification of the ethylene/vinyl ester copolymer obtained can be conducted by a known method.

Specifically, the EVOH resin includes vinyl alcohol structural units as the main component and further contains a slight amount of vinyl ester structural units which remain without being saponified.

Vinyl acetate is typically used as the vinyl ester-based monomer from the standpoints of availability on the market and that the efficiency of impurity treatment during production is satisfactory. Other examples of the vinyl ester-based monomer include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate and aromatic vinyl esters such as vinyl benzoate. The aliphatic vinyl esters have usually 3-20 carbon atoms, preferably 4-10 carbon atoms, especially preferably 4-7 carbon atoms. Although these vinyl esters are usually used alone, two or more thereof may be simultaneously used according to need.

The content of ethylene structural units in the EVOH resin, in terms of the value determined in accordance with ISO 14663, is usually 20-60% by mole, preferably 25-50% by mole, especially preferably 25-35% by mole. In case where the content thereof is too low, this resin tends to show reduced gas barrier properties under high-humidity conditions and have reduced melt moldability. Conversely, in case where the content thereof is too high, this resin tends to be insufficient in gas barrier property.

The degree of saponification of the vinyl ester moieties in the EVOH resin, in terms of the value determined in accordance with JIS K6726 (the EVOH resin is examined in the state of a homogeneous solution thereof in a water/methanol solvent), is usually 90-100% by mole, preferably 95-100% by mole, especially preferably 99-99.9% by mole. In case where the degree of saponification thereof is too low, this resin is prone to be reduced in gas barrier property, thermal stability, moisture resistance, etc.

The melt flow rate (MFR) (210°C; load, 2,160 g) of the EVOH resin, as measured using a melt indexer (extrusion type plastometer), is usually 0.5-100 g/10 min, preferably 1-50 g/10 min, especially preferably 3-35 g/10 min. In case where the MFR thereof is too high, this resin tends to have unstable film-forming properties. In case where the MFR thereof is too low, this resin tends to have too high a viscosity and be difficult to melt-extrude.

The EVOH resin in the invention may further contain structural units derived from the following comonomers, so long as such structural units do not lessen the effect of the invention (the content thereof is, for example, 10% by mole or less).

Examples of the comonomers include: olefins such as propylene, 1-butene, and isobutene; hydroxy-containing α-olefins such as 3-buten-1-ol, 3-butene-1,2-diol, 4-penten-1-ol, and 5-hexene-1,2-diol and derivatives thereof, such as products of esterification or acylation thereof; unsaturated acids such as acrylic acid, methacrylic acid, crotonic acid, phthalic acid (anhydride), maleic acid (anhydride), and itaconic acid (anhydride), or salts thereof or mono- or dialkyl esters having 1-18 carbon atoms; acrylamide analogues such as acrylamide, N-alkylacrylamides having 1-18 carbon atoms, N,N-dimethylacrylamide, 2-acrylamidopropanesulfonic acid or salts thereof, and acrylamidopropyldimethylamine or acid salts or quaternary salts thereof; methacrylamide analogues such as methacrylamide, N-alkylmethacrylamides having 1-18 carbon atoms, N,N-dimethylmethacrylamide, 2-methacrylamidopropanesulfonic acid or salts thereof, and methacrylamidopropyldimethylamine or acid salts or quaternary salts thereof; N-vinylamides such as N-vinylpyrrolidone, N-vinylformamide, and N-vinylacetamide; vinyl cyanide analogues, such as acrylonitrile and methacrylonitrile; vinyl ethers such as alkyl vinyl ethers having 1-18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinylsilanes such as trimethoxyvinylsilnae; allyl acetate; halogenated allyl compounds such as allyl chloride; allyl alcohol analogues such as allyl alcohol, dimethoxyallyl alcohol; trimethyl(3-acrylamido-3-dimethylpropyl)ammonium chloride; and acrylamido-2-methylpropanesulfonic acid.

It is also possible to use an EVOH resin which has undergone "post-modification" such as urethane formation, acetalization, cyanoethylation, or oxyalkylene addition.

In particular, EVOH resins obtained through copolymerization with a hydroxy-containing α-olefin are preferred from the standpoint that these resins have satisfactory secondary formability. Preferred of these is an EVOH resin having 1,2-diol in side chains.

This EVOH resin having 1,2-diol in side chains is one which contains 1,2-diol structural units as side chains. The 1,2-diol structural units specifically are structural units represented by the following general formula (1).

[Chem. 1]

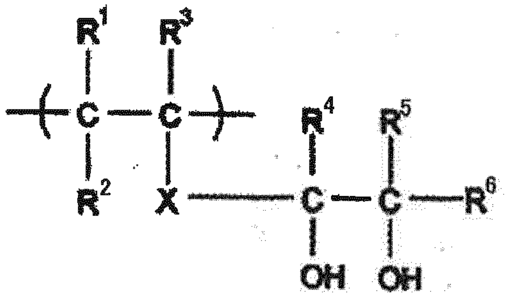

(1)

[In general formula (1), $R^1$, $R^2$, and $R^3$ each independently represent a hydrogen atom or an organic group, X represents a single bond or a linking chain, and $R^4$, $R^5$, and $R^6$ each independently represent a hydrogen atom or an organic group.]

The organic groups in the 1,2-diol structural units represented by general formula (1) are not particularly limited. Examples thereof include saturated hydrocarbon groups such as methyl, ethyl, n-propyl, isopropyl, n-butyl, isobutyl, and tert-butyl, aromatic hydrocarbon groups such as phenyl and benzyl, halogen atoms, hydroxy group, acyloxy groups, alkoxycarbonyl groups, carboxyl group, and sulfo group.

$R^1$ to $R^3$ each preferably are either a saturated hydrocarbon group having usually 1-30 carbon atoms, especially 1-15 carbon atoms, desirably 1-4 carbon atoms, or a hydrogen atom, and each most preferably are a hydrogen atom. $R^4$ to $R^6$ each preferably are either an alkyl group having usually 1-30 carbon atoms, especially 1-15 carbon atoms, desirably 1-4 carbon atoms, or a hydrogen atom, and each most preferably are a hydrogen atom. It is most preferable that all the $R^1$ to $R^6$ should be hydrogen.

X in the structural units represented by general formula (1) typically is a single bond.

So long as the effect of the invention is not lessened, X may be a linking chain. This linking chain is not particularly limited. Examples thereof include hydrocarbon chains such as alkylenes, alkenylenes, alkynylenes, phenylene, and naphthylene (these hydrocarbons may have been substituted with, for example, halogen atoms such as fluorine, chlorine, and bromine atoms), structures including an ether bond moiety, such as -O-, $-(CH_2O)_m-$, $-(OCH_2)_m-$, and $-(CH_2O)_mCH_2-$, structures including a carbonyl group, such as -CO-, -COCO-, $-CO(CH_2)_mCO-$, and $-CO(C_6H_4)CO-$, structures including a sulfur atom, such as -S-, -CS-, -SO-, and $-SO_2-$, structures including a nitrogen atom, such as -NR-, -CONR-, -NRCO-, -CSNR-, -NRCS-, and -NRNR-, structures including a heteroatom, such as a structure containing a phosphorus atom, e.g., $-HPO_4-$, structures including a silicon atom, such as $-Si(OR)_2-$, $-OSi(OR)_2-$, and $-OSi(OR)_2O-$, and structures including a metal atom, such as structures including a titanium atom, e.g., $-Ti(OR)_2-$, $-OTi(OR)_2-$, and $-OTi(OR)_2O-$, and structures including an aluminum atom, e.g., -Al(OR)-, -OAl(OR)-, and -OAl(OR)O-. The R moieties are each independently any desired substituent, preferably a hydrogen atom or an alkyl group, and m is a natural number and is usually 1-30, preferably 1-15, more preferably 1-10. Preferred of these are $-CH_2OCH_2-$ and hydrocarbon chains having 1-10 carbon atoms, from the standpoint of stability during production or during use. More preferably, X is a hydrocarbon chain having 1-6 carbon atoms, in particular, having one carbon atom.

The most preferred structure of the 1,2-diol structural units represented by general formula (1) is one in which $R^1$ to $R^6$ are all hydrogen atoms and X is a single bond. Namely, structural units represented by the following structural formula (1a) are most preferred.

[Chem. 2]

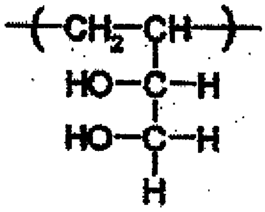

(1a)

In particular, in the case where the EVOH resin contains 1,2-diol structural units represented by general formula (1), it is preferable that the content thereof should be usually 0.1-20% by mole, desirably 0.1-15% by mole, especially 0.1-10% by mole.

The EVOH resin to be used in the invention may be a mixture thereof with other EVOH resin(s) of different

kind. Examples of the other EVOH resins include one which differs in the content of 1,2-diol structural units represented by general formula (1), one which differs in ethylene content, one which differs in the degree of saponification, one which differs in the degree of polymerization, one which differs in MFR, and one which differs in other comonomer ingredients.

Into the EVOH resin to be used in the invention, ingredients generally incorporated into EVOH resins may have been incorporated so long as the effect of the invention is not lessened thereby. Examples of such ingredients include heat stabilizers, antioxidants, antistatic agents, colorants, ultraviolet absorbers, lubricants, plasticizers, light stabilizers, surfactants, antibacterial agents, desiccants, antiblocking agents, flame retardants, crosslinking agents, hardeners, blowing agents, crystal nucleating agents, antifogging agents, additives for biodegradation, silane coupling agents, and oxygen absorbers.

As the heat stabilizers, additives such as an organic acid, e.g., acetic acid, propionic acid, butyric acid, lauric acid, stearic acid, oleic acid, or behenic acid, a salt of any of these, e.g., an alkali metal salt (sodium, potassium, etc.), a salt with an alkaline earth metal (calcium, magnesium, etc.), or a zinc salt, an inorganic acid such as sulfuric acid, sulfurous acid, carbonic acid, phosphoric acid, or boric acid, or a salt of any of these, e.g., an alkali metal salt (sodium, potassium, etc.), a salt with an alkaline earth metal (calcium, magnesium, etc.), or a zinc salt, etc. may be added beforehand in a small amount for the purpose of improving various properties, e.g., thermal stability during melt molding.

It is preferable that the content of the EVOH resin in the resin to be purged should be 1% by weight or more. Contents thereof in the range of 1-99% by weight of the resin to be purged are permissible. The resin to be purged may be constituted of one or more EVOH resins only.

Polar-group-containing thermoplastic resins tend to be reduced in gas barrier property by moisture. Polar-group-containing thermoplastic resins are hence used as packaging materials, etc., usually in the form of a multilayer structure including a hydrophobic thermoplastic resin (e.g., a polyolefin-based resin, polystyrene-based resin, or polyester-based resin) as a surface layer and optionally further including an adhesive resin (e.g., a resin based on a polyolefin modified with an unsaturated carboxylic acid) interposed between the layers.

In cases when the multilayer structure is produced, there are often cases where scraps which have resulted from the production thereof are reclaimed and the reclaimed scraps are recycled to the extruder and melted and molded into at least one layer of a new multilayer structure.

This recycling operation is a process in which resin compositions respectively including a polar-group-containing thermoplastic resin, a hydrophobic thermoplastic resin, and an adhesive resin which are for constituting the multilayer structure are melted, mixed, and molded by means of extruders. The purging agent of the invention is effective also in the case where such a resin composition including a highly polar resin described above is purged, i.e., washed and removed, from the extruder.

Although the purging agent of the invention is most suitable for the purging of EVOH resins present in melt molding machines, this purging agent can be similarly used also for known thermoplastic resins. Examples of such thermoplastic resins include thermoplastic resins having a melting point (or flow starting temperature in the case of amorphous resins) of usually 100-270°C, preferably 120-250°C, especially preferably 150-230°C. Examples of such thermoplastic resins include vinyl-alcohol-based resins (e.g., PVA resins) other than EVOH resins, PA resins, polyolefin-based resins (e.g., linear low-density polyethylene, low-density polyethylene, medium-density polyethylene, high-density polyethylene, ethylene/vinyl acetate copolymers, ionomers, ethylene/propylene copolymers, ethylene/acrylic ester copolymers, polypropylene, propylene/$\alpha$-olefin ($\alpha$-olefin having 4-20 carbon atoms) copolymers, polybutene, and polypentene), modified polyolefin-based resins obtained by graft-modifying polyolefin-based resins with an unsaturated carboxylic acid, polyester-based resins, polyvinyl chloride-based resins, thermoplastic polyurethane-based resins, polyvinylidene chloride, acrylic resins, polystyrene-based resins, vinyl-ester-based resins, polyester elastomers, polyurethane elastomers, chlorinated polyethylene, chlorinated polypropylene, and aromatic or aliphatic polyketones. These resins may be used alone, or two or more thereof may be simultaneously used.

Of these, vinyl-alcohol-based resins, such as PVA resins which are highly polar thermoplastic resins as stated hereinabove and PA resins can be effectively removed like EVOH resins.

Since the purging agent of the invention contains a metal salt in a relatively large amount, this purging agent, when applied to a vinyl-alcohol-based resin such as an EVOH resin or a PVA resin, is highly effective in causing the metal salt to move into the vinyl-alcohol-based resin polymer to decompose the resin. This purging agent is hence effective in removing vinyl-alcohol-based resins, in particular, EVOH resins, that are adherent to narrow high-temperature portions, in particular, to the die parts of melt molding machines, etc.

The resin to be purged according to the invention may contain known or common ingredients such as a lubricant, metal oxide (e.g., silicon oxide, titanium oxide, or the like used as a pigment), antioxidant, desiccant, filler, and oxygen absorber.

<Melt molding Machine to be used>

The melt molding machine to be used for melting and molding the resin to be purged is not particularly limited,

and a common extruder can be used. Examples thereof include single-screw extruders, twin-screw extruders, and multi-screw extruders, and any of these may be used. Specifically, use may be made of a single-layer casting extruder, single-layer inflation extruder, single-layer blow extruder, injection molding machine, multilayer casting extruder, multilayer inflation extruder, multilayer blow extruder, co-injection molding machine, and the like.

<Purging Method>

Since the purging agent of the invention contains a relatively large amount of at least one metal salt selected from the group consisting of alkali metal salts and salts of alkaline earth metals, the metal salt contained in the purging agent moves into the resin to be purged and this metal salt decomposes the resin to be purged. Consequently, this purging agent exhibits excellent purging performance even in, for example, the die portion of a melt molding machine, in which the channel is narrow and is located in a high-temperature severe environment. The purging agent thus shows an excellent cleaning effect.

For the method of purging with the purging agent of the invention, a known technique can be employed. Specifically, use may be made of a method in which after a thermoplastic resin has been melted and molded with a melt molding machine, the purging agent of the invention is supplied to fill the inside of the melt molding machine therewith and the purging agent is then discharged.

The temperature of the melt molding machine (for example, barrel temperature in the case of an extruder) during the melting and molding of the thermoplastic resin (resin to be purged) is usually 150-260°C.

The temperature of the melt molding machine (barrel temperature in the case of an extruder) at the time when the inside of the melt molding machine is filled with the purging agent of the invention is usually 180-280°C, preferably 200-260°C, more preferably 210-260°C, especially preferably 230-260°C. In case where the temperature thereof is too high, there is a tendency that the purging agent has a reduced viscosity, resulting in a decrease in the effect of removing the resin to be purged. In case where the temperature thereof is too low, the dischargeability of the purging agent itself is prone to decrease.

In the case of an extruder, for example, the expression "temperature of the melt molding machine during the melting and molding of a thermoplastic resin or at the time when the melt molding machine is filled with the purging agent" means the barrel temperature of the extruder, i.e., the surface temperature of the barrel of the extruder. In the case where the barrel of the extruder has a plurality of sections and the individual sections have been set at different temperatures, the highest of the temperatures is referred to as the barrel temperature.

The amount of the purging agent of the invention to be used may be determined usually in accordance with the size of the melt molding machine and the degree of fouling by the resin to be purged. However, from the standpoints of handleability and profitability, the amount of the purging agent to be used is usually 5-100 times, preferably 8-50 times, especially preferably 10-30 times, as much as the resin capacity of the melt molding machine (the volume of the space capable of being filled with resin, which is the volume obtained by subtracting the volume of the screw(s) from the barrel capacity).

In the purging method of the invention, it is preferable that after the purging agent has been supplied to the melt molding machine, e.g., an extruder, to fill the machine therewith, the screw(s) should be stopped and allowed to stand for a certain time period while keeping the inside of the melt molding machine in the state of having been filled with the purging agent, in order to facilitate the movement of the metal salt contained in the purging agent into the resin to be purged. The standing period is usually 5 minutes to 5 hours, more preferably 0.2-3 hours, especially preferably 0.5-2 hours. In case where the period of standing is too long, there is a tendency that the production efficiency decreases or the cleaning effect decreases due to deterioration of the purging agent itself. In case where the period of standing is too short, the purging effect is prone to decrease.

In the case where the steps of causing the purging agent to stay in the melt molding machine and of further supplying the purging agent are repeated as in the case of a method which includes filling the purging agent into an extruder, subsequently stopping the screw and allowing the screw to stand for a certain time period, thereafter filling the purging agent thereinto again, and allowing the screw to stand for a certain time period, it is preferable that the sum of the time periods during which the purging agent stays in the melt molding machine should be within the range shown above.

In the case of using an extruder, the screw rotation speed of the extruder during the purging may be the same as in the molding of the resin to be purged, from the standpoint of convenience. From the standpoint of practicability, the screw rotation speed is usually 5-300 rpm, preferably 10-250 rpm, especially preferably 10-100 rpm. Incidentally, periodically heightening/lowering the screw rotation speed during the purging is expected to improve the effect of extruding the resin to be purged.

As described above, the purging agent of the invention and the method of purging using the purging agent exhibit the following excellent effect. Since the purging agent contains a relatively large amount of a metal salt and has a large value of shear viscosity ratio regarding specific shear rates, an excellent cleaning effect is obtained even in, for example, the die portion of a melt molding machine, in which the channel is narrow and is located in a high-temperature

severe environment.

Examples

The present invention will be explained below in detail by reference to Examples, but the invention should not be construed as being limited to the following Examples unless the invention departs from the spirit thereof.
In the following, "parts" is by weight unless otherwise indicated.

<Example 1>

As a purging agent, use was made of: 90 parts of linear low-density polyethylene ("GS650", manufactured by NUC Corp.; MFR, 0.6 g/10 min (190°C; load, 2,160 g); density, 0.92 g/cm$^3$; shear viscosity (Pa·s) at temperature of 230°C and shear rate of 12.2 sec$^{-1}$, 2,980; shear viscosity (Pa·s) at temperature of 230°C and shear rate of 1,824 sec$^{-1}$, 201; shear viscosity ratio [(shear viscosity (Pa·s) at temperature of 230°C and shear rate of 12.2 sec$^{-1}$)/(shear viscosity (Pa·s) at temperature of 230°C and shear rate of 1,824 sec$^{-1}$)], 14.8); and 5 parts of magnesium stearate (SM-PG, manufactured by Sakai Chemical Industry Co., Ltd.) and 5 parts of basic magnesium carbonate (manufactured by Kyowa Chemical Industry Co., Ltd.; lightweight) as metal salts. These ingredients were dryblended.
The content of the metal salts in this purging agent was 10% by weight, and the content of the metal salts based on the hydrocarbon-based resin was 1.5% by weight in terms of metal amount. This purging agent had a shear viscosity (Pa·s), as measured at a temperature of 230°C and a shear rate of 12.2 sec$^{-1}$, of 2,360 and a shear viscosity (Pa·s), as measured at a temperature of 230°C and shear rate of 1,824 sec$^{-1}$, of 175, and had a shear viscosity ratio [(shear viscosity (Pa·s) at temperature of 230°C and shear rate of 12.2 sec$^{-1}$)/(shear viscosity (Pa·s) at temperature of 230°C and shear rate of 1,824 sec$^{-1}$)] of 13.5. The shear viscosity ratio was determined by measuring the shear viscosity at 230°C and at each of the shear rates using capillary rheometer "Capirograph ID", manufactured by Toyo Seiki Seisaku-Sho, Ltd., and calculating the ratio from the results of the measurement.
This dry blend was melt-kneaded and pelletized using a twin-screw extruder under the following conditions.

Screw diameter: 30 mmΦ
Extruder temperatures: C2/C3/C4/C5/C6 ······ C16/D = 80/120/180/210/220 ······ 220/230°C
Ejection rate: 25 kg/h
Rotation speed: 250 rpm

The pellets obtained had an MFR, as measured under the conditions of 230°C and a load of 2,160 g, of 1.3 g/10 min.

<Model Experiment for reproducing Thermally Deteriorated State of Resin to be purged>

Using the following single-screw extruder in which the extruder and die temperatures were set as shown below, a saponified ethylene/vinyl acetate copolymer (ethylene content, 29% by mole; degree of saponification, 99.8% by mole; MFR, 3.4 g/10 min (210°C; load, 2,160 g)) was fed and simultaneously discharged for 30 minutes. This extruder was then allowed to stand in the heated state for 2 hours to reproduce the state which is encountered after long-term production of molded EVOH resin objects.

Screw type: full-flighted
Screw diameter: 40 mmΦ
L/D: 28
Screw compression ratio: 2.5
Die: coat-hanger die
Extruder temperatures: C1/C2/C3/C4/H/D = 220/250/260/260/260/240°C
Rotation speed: 40 rpm

<Purging Operation>

Thereafter, while maintaining the extruder temperatures, the purging agent was supplied for 20 minutes. In this operation, the screw rotation speed was set at 20 rpm during the first 10-minute period and at 40 rpm during the next 10-minute period. Subsequently, at the extruder temperatures shown above, the extruder in the state of having been filled with the purging agent was allowed to stand for 1 hour.

[Purging Effect]

Thereafter, the EVOH resin was fed again to the extruder to initiate film formation. After the film formation was conducted for 2 hours, the purging agent within the extruder was replaces with a small amount of polyethylene. This extruder was then disassembled and examined for die fouling and evaluated in accordance with the following evaluation criteria.

A: The die was completely free from adherent substance which was the resin to be purged.
B: An adherent substance in thin film form is slightly present in the die, but the adherent substance has sufficiently reduced viscosity and cleaning is easy.
C: A somewhat thick resin layer is adherent to the die, and a longer time is required for cleaning than in the state B.
D: A thick resin layer is adherent to the die and the viscosity of the adherent substance has decreased little. A longer time is hence required for cleaning than in the state C.

<Example 2>

A purging agent was produced and evaluated in the same manners as in Example 1, except that as a hydrocarbon-based resin, use was made of linear low-density polyethylene ("NUCG7641", manufactured by NUC Corp.; MFR, 0.6 g/10 min (190°C; load, 2,160 g); density, 0.922 g/$cm^3$; shear viscosity (Pa·s) at temperature of 230°C and shear rate of 12.2 $sec^{-1}$, 2,710; shear viscosity (Pa·s) at temperature of 230°C and shear rate of 1,824 $sec^{-1}$, 192; shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)], 14.1).

This purging agent had a shear viscosity (Pa·s), as measured at a temperature of 230°C and a shear rate of 12.2 $sec^{-1}$, of 2,390 and a shear viscosity (Pa·s), as measured at a temperature of 230°C and a shear rate of 1,824 $sec^{-1}$, of 171, and had a shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)] of 14.0.

<Comparative Example 1>

A purging agent was produced and evaluated in the same manners as in Example 1, except that as a hydrocarbon-based resin, use was made of linear low-density polyethylene ("NOVATEC LLUF230", manufactured by Japan Polyethylene Corp.; MFR, 1.0 g/10 min (190°C; load, 2,160 g); density, 0.921 g/$cm^3$; shear viscosity (Pa·s) at temperature of 230°C and shear rate of 12.2 $sec^{-1}$, 3,490; shear viscosity (Pa·s) at temperature of 230°C and shear rate of 1,824 $sec^{-1}$, 274; shear viscosity ratio [(shear viscosity (Pa·s) at temperature of 230°C and shear rate of 12.2 $sec^{-1}$)/(shear viscosity (Pa· s) at temperature of 230°C and shear rate of 1,824 $sec^{-1}$)], 12.8).

This purging agent had a shear viscosity (Pa·s), as measured at a temperature of 230°C and a shear rate of 12.2 $sec^{-1}$, of 2,620 and a shear viscosity (Pa·s), as measured at a temperature of 230°C and a shear rate of 1,824 $sec^{-1}$, of 238, and had a shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)] of 11.0.

<Comparative Example 2>

A purging agent was produced and evaluated in the same manners as in Example 1, except that as a hydrocarbon-based resin, use was made of metallocene linear low-density polyethylene ("SP1510", manufactured by Prime Polymer Co., Ltd.; MFR, 1.0 g/10 min (190°C; load, 2,160 g); density, 0.913 g/$cm^3$; shear viscosity (Pa·s) at temperature of 230°C and shear rate of 12.2 $sec^{-1}$, 3,470; shear viscosity (Pa·s) at temperature of 230°C and shear rate of 1,824 $sec^{-1}$, 312; shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)], 11.1).

This purging agent had a shear viscosity (Pa·s), as measured at a temperature of 230°C and a shear rate of 12.2 $sec^{-1}$, of 2,840 and a shear viscosity (Pa·s), as measured at a temperature of 230°C and a shear rate of 1,824 $sec^{-1}$, of 261, and had a shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)] of 10.9.

<Comparative Example 3>

A purging agent was produced and evaluated in the same manners as in Example 1, except that as a hydrocarbon-based resin, use was made of metallocene linear low-density polyethylene ("SP2510", manufactured by Prime Polymer Co., Ltd.; MFR, 1.5 g/10 min (190°C; load, 2,160 g); density, 0.923 g/$cm^3$; shear viscosity (Pa·s) at temperature

of 230°C and shear rate of 12.2 $sec^{-1}$, 2,250; shear viscosity (Pa·s) at temperature of 230°C and shear rate of 1,824 $sec^{-1}$, 264; shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)], 8.5).

This purging agent had a shear viscosity (Pa·s), as measured at a temperature of 230°C and a shear rate of 12.2 $sec^{-1}$, of 2,480 and a shear viscosity (Pa·s), as measured at a temperature of 230°C and a shear rate of 1,824 $sec^{-1}$, of 220, and had a shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)] of 11.3.

<Comparative Example 4>

A purging agent was produced and evaluated in the same manners as in Example 1, except that as a hydrocarbon-based resin, use was made of metallocene linear low-density polyethylene ("Sumikasen E FV104", manufactured by Sumitomo Chemical Co., Ltd.; MFR, 1.0 g/10 min (190°C; load, 2,160 g); density, 0.913 $g/cm^3$; shear viscosity (Pa·s) at temperature of 230°C and shear rate of 12.2 $sec^{-1}$, 3,920; shear viscosity (Pa·s) at temperature of 230°C and shear rate of 1,824 $sec^{-1}$, 332; shear viscosity ratio [(shear viscosity (Pa·s) at temperature of 230°C and shear rate of 12.2 $sec^{-1}$)/(shear viscosity (Pa· s) at temperature of 230°C and shear rate of 1,824 $sec^{-1}$)], 11.8).

This purging agent had a shear viscosity (Pa·s), as measured at a temperature of 230°C and a shear rate of 12.2 $sec^{-1}$, of 3,310 and a shear viscosity (Pa·s), as measured at a temperature of 230°C and a shear rate of 1,824 $sec^{-1}$, of 283, and had a shear viscosity ratio [(shear viscosity (Pa·s) at temperature of 230°C and shear rate of 12.2 $sec^{-1}$)/(shear viscosity (Pa·s) at temperature of 230°C and shear rate of 1,824 $sec^{-1}$)] of 11.7.

<Reference Example 1>

The purging agent produced in Example 1 was used to evaluate the purging effect thereof in the same manner using linear low-density polyethylene ("GS650", manufactured by NUC Corp.) as the resin to be purged.

<Reference Example 2>

The purging agent produced in Comparative Example 3 was used to evaluate the purging effect thereof in the same manner using linear low-density polyethylene ("SP2510", manufactured by Prime Polymer Co., Ltd.) as the resin to be purged.

The results of Examples 1 and 2, Comparative Examples 1 to 4, and Reference Examples 1 and 2 are shown in Table 1.

[Table 1]

| | Properties of purging agent | | | Resin to be purged | Purging effect |
|---|---|---|---|---|---|
| | η(X): shear viscosity at temperature of 230 °C and shear rate of 12.2 $sec^{-1}$ (Pa·s) | η(Y): shear viscosity at temperature of 230 °C and shear rate of 1824 $sec^{-1}$ (Pa·s) | Shear viscosity ratio η(X)/ η(Y) | | |
| Example 1 | 2360 | 175 | 13.5 | EVOH resin | B |
| Example 2 | 2390 | 171 | 14.0 | EVOH resin | B |
| Comparative Example 1 | 2620 | 238 | 11.0 | EVOH resin | C |
| Comparative Example 2 | 2840 | 261 | 10.9 | EVOH resin | D |
| Comparative Example 3 | 2480 | 220 | 11.3 | EVOH resin | D |
| Comparative Example 4 | 3310 | 283 | 11.7 | EVOH resin | D |
| Reference Example 1 | 2360 | 175 | 13.5 | polyethylene resin | B |

(continued)

| | Properties of purging agent | | | Resin to be purged | Purging effect |
|---|---|---|---|---|---|
| | η(X): shear viscosity at temperature of 230 °C and shear rate of 12.2 $sec^{-1}$ (Pa·s) | η(Y): shear viscosity at temperature of 230 °C and shear rate of 1824 $sec^{-1}$ (Pa·s) | Shear viscosity ratio η(X)/ η(Y) | | |
| Reference Example 2 | 2480 | 220 | 11.3 | polyethylene resin | B |

As Table 1 shows, it was understood that Examples 1 and 2, in which purging agents each having a large value of shear viscosity ratio regarding specific shear rates were used, showed a better purging effect as compared with Comparative Examples 1 to 4.

Furthermore, as can be seen from Example 1, Comparative Example 3, and Reference Examples 1 and 2, it was understood that the purging agent produced in Comparative Example 3 showed a purging effect against the polyethylene resin (Reference Example 2) but showed no effect against the EVOH resin, whereas the purging agent of the invention was able to show an effective purging effect against the EVOH resin.

While the invention has been described in detail and with reference to specific embodiments thereof, it will be apparent to one skilled in the art that various changes and modifications can be made therein without departing from the spirit and scope thereof. This application is based on a Japanese patent application filed on November 26, 2013 (Application No. 2013-243495) and a Japanese patent application filed on November 12, 2014 (Application No. 2014-229819), the contents thereof being incorporated herein by reference.

Industrial Applicability

The purging agent of the invention, which has a specific shear viscosity ratio, shows a satisfactory purging effect and is excellent especially in terms of purging effect against EVOH resins commonly used as packaging materials. This purging agent hence is exceedingly useful industrially.

## Claims

1. A purging agent for use in purging a resin to be purged which comprises an ethylene/vinyl ester copolymer saponification resin,
   the purging agent comprising a hydrocarbon-based resin and at least one metal salt selected from the group consisting of alkali metal salts and salts of alkaline earth metals, the content of the metal salt being higher than 1% by weight but not higher than 20% by weight in terms of metal amount based on the hydrocarbon-based resin, and the purging agent having a shear viscosity ratio as determined with the following equation of 12-16.

   $$\text{Shear viscosity ratio} = \eta(X)/\ \eta(Y)$$

   [In the equation, η(X) is shear viscosity (Pa·s) at a temperature of 230°C and a shear rate of 12.2 $sec^{-1}$, and η(Y) is shear viscosity (Pa·s) at a temperature of 230°C and a shear rate of 1,824 $sec^{-1}$.]

2. The purging agent according to claim 1, which has a melt flow rate as measured at a temperature of 230°C under a load of 2,160 g of 0.2-20 g/10 min.

3. The purging agent according to claim 1 or claim 2, which has a shear viscosity η(x) as measured at a temperature of 230°C and a shear rate of 12.2 $sec^{-1}$ of 1,000-4,000 Pa·s.

4. The purging agent according to any one of claims 1 to 3, which has a shear viscosity η(y) as measured at a temperature of 230°C and a shear rate of 1,824 $sec^{-1}$ of 60-340 Pa·s.

5. The purging agent according to any one of claims 1 to 4, wherein the metal salts are at least one metal salt selected from organic salts in the group consisting of alkali metal salts and salts of alkaline earth metals.

6. The purging agent according to any one of claims 1 to 4, wherein the metal salts are at least one metal salt selected from inorganic salts in the group consisting of alkali metal salts and salts of alkaline earth metals.

7. The purging agent according to any one of claims 1 to 6, wherein the metal salt is a combination of any one of organic salts and any one of inorganic salts in the group consisting of alkali metal salts and salts of alkaline earth metals.

8. The purging agent according to claim 7, wherein an inorganic salt/organic salt weight ratio is 0.05 to 10.

9. A method for purging a resin to be purged which is present in a melt molding machine, the method comprising using the purging agent according to any one of claims 1 to 8.

10. A method for purging a resin to be purged which is present in a melt molding machine, the method comprising filling the melt molding machine with the purging agent according to any one of claims 1 to 8, stopping the screw and allowing the melt molding machine to stand for 5 minutes to 5 hours while keeping the inside of the melt molding machine in the state of having been filled with the purging agent, and discharging the purging agent.

11. The method for purging a resin to be purged according to claim 9 or claim 10, wherein the resin to be purged is an ethylene/vinyl ester copolymer saponification resin.

**Patentansprüche**

1. Reinigungsmittel zur Verwendung beim Reinigen eines durch Reinigung zu entfernenden Harzes, das ein Ethylen/Vinylester-Copolymer-Verseifungsharz aufweist,
wobei das Reinigungsmittel ein Harz auf Kohlenwasserstoffbasis und zumindest ein Metallsalz aufweist, das aus der Gruppe bestehend aus Alkalimetallsalzen und Salzen von Erdalkalimetallen ausgewählt ist, wobei der Gehalt des Metallsalzes höher als 1 Gewichts-%, jedoch nicht höher als 20 Gewichts-% in Bezug auf eine Metallmenge basierend auf dem Harz auf Kohlenwasserstoffbasis ist, und das Reinigungsmittel ein Scherviskositätsverhältnis aufweist, das mit der nachstehende Gleichung 12 bis 16 bestimmt wird.

$$\text{Scherviskositätsverhältnis} = \eta(X)/\eta(Y)$$

[In der Gleichung ist $\eta(X)$ die Scherviskosität (Pa · s) bei einer Temperatur von 230 °C und einer Schergeschwindigkeit von 12,2 $s^{-1}$, und $\eta(Y)$ ist die Scherviskosität (Pa · s) bei einer Temperatur von 230 °C und einer Schergeschwindigkeit von 1.824 $s^{-1}$.]

2. Reinigungsmittel nach Anspruch 1, die eine Schmelzflussrate aufweist, die bei einer Temperatur von 230 °C unter einer Last von 2.160 g von 0,2 - 20 g/10 min gemessen wird.

3. Reinigungsmittel nach Anspruch 1 oder 2, das eine Scherviskosität $\eta(Y)$ aufweist, die bei einer Temperatur von 230 °C und eine Schwergeschwindigkeit von 12,2 $s^{-1}$ von 1.000 bis 4.000 Pa · s gemessen wird.

4. Reinigungsmittel nach einem der Ansprüche 1 bis 3, das eine Scherviskosität $\eta(Y)$ aufweist, die bei einer Temperatur von 230 °C und einer Schergeschwindigkeit von 1.824 $s^{-1}$ von 60 - 340 Pa · s gemessen wird.

5. Reinigungsmittel nach einem der Ansprüche 1 bis 4, wobei die Metallsalze zumindest ein Metallsalz sind, das aus organischen Salzen in der Gruppe bestehend aus Alkalimetallsalzen und Salze von Erdalkalimetallen ausgewählt ist.

6. Reinigungsmittel nach einem der Ansprüche 1 bis 4, wobei die Metallsalze zumindest ein Metallsalz sind, das aus anorganischen Salzen in der Gruppe bestehend aus Alkalimetallsalzen und Salzen von Erdalkalimetallen ausgewählt ist.

7. Reinigungsmittel nach einem der Ansprüche 1 bis 6, wobei das Metallsalz eine Kombination von einem von organischen Salzen und einem von anorganischen Salzen in der Gruppe bestehend aus Alkalimetallsalzen und Salzen von Erdalkalimetallen ist.

**8.** Reinigungsmittel nach Anspruch 7, wobei ein Gewichtsverhältnis von einem anorganischen Salz zu einem organischen Salz 0,05 bis 10 ist.

**9.** Verfahren zum Reinigen eines durch Reinigung zu entfernenden Harzes, das in einer Schmelzformmaschine vorhanden ist, wobei das Verfahren ein Verwenden des Reinigungsmittels nach einem der Ansprüche 1 bis 8 beinhaltet.

**10.** Verfahren zum Reinigen eines durch Reinigung zu entfernenden Harzes, das in einer Schmelzformmaschine vorhanden ist, wobei das Verfahren ein Befüllen der Schmelzformmaschine mit dem Reinigungsmittel nach einem der Ansprüche 1 bis 8, ein Anhalten der Schnecke und ein Zulassen beinhaltet, dass die Schmelzformmaschine fünf Minuten bis zu fünf Stunden stillsteht, während die Innenseite der Schmelzformmaschine in dem Zustand beibehalten wird, in dem sie mit dem Reinigungsmittel befüllt ist und das Reinigungsmittel abgelassen wird.

**11.** Verfahren zum Reinigen eines durch Reinigung zu entfernenden Harzes nach Anspruch 9 oder Anspruch 10, wobei das durch Reinigung zu entfernende Harz ein Ethylen/Vinylester-Copolymer-Verseifungsharz ist.

**Revendications**

**1.** Agent de purge destiné à être utilisé dans la purge d'une résine destinée à être purgée qui comprend une résine de saponification de copolymère éthylène/ester de vinyle,
l'agent de purge comprenant une résine à base d'hydrocarbures et au moins un sel métallique choisi dans le groupe consistant en les sels de métaux alcalins et les sels de métaux alcalino-terreux, la teneur du sel métallique étant supérieure à 1 % en poids mais pas supérieure à 20 % en poids en termes de quantité de métal basée sur la résine à base d'hydrocarbures, et l'agent de purge ayant un rapport de viscosités de cisaillement tel que déterminé avec l'équation suivante de 12-16,

$$\text{rapport de viscosités de cisaillement} = \eta(X)/\eta(Y)$$

[dans l'équation, $\eta(X)$ est la viscosité de cisaillement (Pa.s) à une température de 230°C et une vitesse de cisaillement de 12,2 $s^{-1}$, et $\eta(Y)$ est la viscosité de cisaillement (Pa.s) à une température de 230°C et une vitesse de cisaillement de 1824 $s^{-1}$].

**2.** Agent de purge selon la revendication 1, qui a un indice de fluidité tel que mesuré à une température de 230°C sous une charge de 2160 g de 0,2 - 20 g/10 min.

**3.** Agent de purge selon la revendication 1 ou la revendication 2, qui a une viscosité de cisaillement $\eta(x)$ telle que mesurée à une température de 230°C et une vitesse de cisaillement de 12,2 $s^{-1}$ de 1000 - 4000 Pa.s.

**4.** Agent de purge selon l'une quelconque des revendications 1 à 3, qui a une viscosité de cisaillement $\eta(\gamma)$ telle que mesurée à une température de 230°C et une vitesse de cisaillement de 1824 $s^{-1}$ de 60 - 340 Pa.s.

**5.** Agent de purge selon l'une quelconque des revendications 1 à 4, où les sels métalliques sont au moins un sel métallique choisi parmi les sels organiques dans le groupe consistant en les sels de métaux alcalins et les sels de métaux alcalino-terreux.

**6.** Agent de purge selon l'une quelconque des revendications 1 à 4, où les sels métalliques sont au moins un sel métallique choisi parmi les sels inorganiques dans le groupe consistant en les sels de métaux alcalins et les sels de métaux alcalino-terreux.

**7.** Agent de purge selon l'une quelconque des revendications 1 à 6, où le sel métallique est une combinaison de l'un quelconque des sels organiques et de l'un quelconque des sels inorganiques dans le groupe consistant en les sels de métaux alcalins et les sels de métaux alcalino-terreux.

**8.** Agent de purge selon la revendication 7, où un rapport en poids sel inorganique/sel organique est 0,05 à 10.

**9.** Procédé pour purger une résine destinée à être purgée qui est présente dans une machine de moulage à l'état

fondu, le procédé comprenant l'utilisation de l'agent de purge selon l'une quelconque des revendications 1 à 8.

**10.** Procédé pour purger une résine destinée à être purgée qui est présente dans une machine de moulage à l'état fondu, le procédé comprenant le remplissage de la machine de moulage à l'état fondu avec l'agent de purge selon l'une quelconque des revendications 1 à 8, l'arrêt de la vis et la mise au repos de la machine de moulage à l'état fondu pendant 5 minutes à 5 heures tout en maintenant l'intérieur de la machine de moulage à l'état fondu dans l'état d'avoir été rempli avec l'agent de purge, et l'évacuation de l'agent de purge.

**11.** Procédé pour purger une résine destinée à être purgée selon la revendication 9 ou la revendication 10, où la résine destinée à être purgée est une résine de saponification de copolymère éthylène/ester de vinyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012031404 A
- JP 2013243495 A
- JP 2014229819 A